# EUROPEAN PATENT SPECIFICATION

(11) **EP 3 747 114 B1**
(45) Date of publication and mention of the grant of the patent: **23.04.2025**
(21) Application number: 19701235.4
(22) Date of filing: 24.01.2019
(51) Int. Cl.: H02K 15/02, H02K 41/02, E01B 25/32, B60L 13/00, B61B 13/00

(54) **METHOD FOR PRODUCING A STACK OF ELECTRICAL STEEL LAMINATIONS AND STACK PRODUCED THEREBY**
VERFAHREN ZUR HERSTELLUNG EINES STAPELS AUS ELEKTROSTAHLBLECHEN UND DADURCH HERGESTELLTER STAPEL
PROCÉDÉ DE PRODUCTION D'UNE PILE DE TÔLES D'ACIER ÉLECTRIQUE ET PILE AINSI OBTENUE

(30) Priority: 31.01.2018 EP 18154535
(43) Date of publication of application: 09.12.2020
(73) Proprietor: Tata Steel Nederland Technology B.V., 1951 JZ Velsen-Noord (NL)
(72) Inventor: KOSMAS, Georgios, 1970 CA IJmuiden (NL)
(74) Representative: Group Intellectual Property Services
(86) International application number: PCT/EP2019/051693
(87) International publication number: WO 2019/149607

(56) References cited:
- CN-A- 103 618 417
- CN-A- 103 618 417
- US-A- 4 328 411
- US-A- 4 665 329
- US-A1- 2001 013 168
- US-A1- 2005 016 249
- US-A1- 2014 209 728

## Description

This invention relates to a method for producing stacks of electrical steel laminations, e.g. for the production of stators for magnetic levitation trains and stacks produced thereby.

A hyperloop is a proposed mode of passenger and/or freight transportation, first used to describe an open-source vactrain design released by a joint team from Tesla and SpaceX. Drawing heavily from Robert Goddard's vactrain, a hyperloop comprises a sealed tube or system of tubes through which a pod may travel free of air resistance or friction conveying people or objects at high speed and acceleration. Elon Musk's version of the concept, first publicly mentioned in 2012, incorporates reduced-pressure tubes in which pressurized capsules ride on air bearings driven by linear induction motors and air compressors. The tubes would run above ground on columns or below ground in tunnels to avoid the dangers of grade crossings. The concept would allow travel which is considerably faster than current rail or air travel times. An ideal hyperloop system will be more energy-efficient, quiet, and autonomous than existing modes of mass transit.

Developments in high-speed rail have historically been impeded by the difficulties in managing friction and air resistance, both of which become substantial when vehicles approach high speeds. The vactrain concept theoretically eliminates these obstacles by employing magnetically levitating trains in evacuated (airless) or partly evacuated tubes, allowing for very high speeds. The principle of magnetic levitation is disclosed in US1020942. However, the high cost of magnetic levitation and the difficulty of maintaining a vacuum over large distances has prevented this type of system from ever being built. The Hyperloop resembles a vactrain system but operates at approximately one millibar (100 Pa) of pressure and can therefore be described as an evacuated tube transport (ETT) system as disclosed in general terms in US5950543.

An Evacuated Tube Transport system (ETT) comprises solves many problems associated with classic transport by moving all obstacles from the path of travel and not allowing their return. Once the path is evacuated and free from obstacles, travel can take place unimpeded. The object traveling (in this case a capsule) is in a tube so it stays on the intended path and no obstacles can get on the path. If subsequent capsules undergo identical acceleration and deceleration, many capsules can travel the same direction in the tube at once with complete safety. Acceleration and deceleration are planned to prevent the capsule from becoming an obstacle to subsequent capsules. The reliability of the capsules is very high due to minimal or no reliance on moving parts. Most of the energy required to accelerate is recovered during deceleration.

Recent developments have also brought forward major improvements in the field of magnetic levitation. The costs of the track is still a significant part of the costs of this method of propulsion. One important element in the track is the stator, which consists of a stack of laminations of electrical steels. Electrical steels are notoriously difficult to handle due to their brittleness and the fact that any additional stresses affect their electromagnetic properties.

It is the object of the invention to improve the method of manufacturing long and narrow electrical steel laminations in terms of manufacturing speed and dimensional control.

This object is reached with a method according to claim 1. Preferable embodiments are provided in the dependent claims.

In the method according to the invention the starting material is provided in the form of a strip of electrical steel.

The major parts of a conventional electric motor are the stator and the rotor. The stator has a number of stator poles with each pole having an electric coil. A rotor is provided with a number of rotor poles of a magnetic material, such as a soft magnetic material, embedded in a rotor body of a magnetic or non-magnetic material. By energizing the coils of the stator poles, a torque is generated by means of which the rotor poles align with the energized stator poles. By energizing the stator poles in a specific sequence, the rotation of the rotor is maintained.

In a conventional motor the stator is an iron core in a ring shape. Once the core rotates in a magnetic field, this generates a voltage in the coils that results in eddy current. In simpler terms, eddy currents are a type of magnetic loss. When losing power due to eddy current flow, this condition is called eddy current loss. Multiple factors impact the amount of power loss attributed to the flow of eddy current. These include the magnetic material's thickness, the frequency of the electromagnetic field induced, and the density of the magnetic flux.

The resistance of the material in which currents flow impacts how eddy currents develop. For instance, when there is a decrease in the cross-sectional area of the material, this results in a reduction in eddy currents. Thus, it is essential to keep the material thinner to minimize the cross-sectional area and lower the amount of the eddy current flow and loss.

Reducing the amount of eddy current is the reason why there are several thin pieces or sheets of iron that make up the cores. In the case of a solid core, there are far greater eddy currents measured, as compared to what takes place in a laminated core. Instead of having just a solid and large piece of material, these thin pieces are capable of generating a higher resistance. As a result, fewer eddy currents take place, which ensures a lower amount of eddy current loss taking place. These individual pieces of iron are called laminations.

The laminations have to be isolated from each other to prevent eddy currents from going from one lamination to the next.

Electrical steel is a soft magnetic material. In such materials an external magnetic field generates a magnetic flux density that is many times higher than would be the case in air. In simple terms, the magnetic field is strengthened by the magnetically soft materials. Flux density is key to the torque of an electric motor.

Core losses are another important criterion for the efficiency of electric drives. These losses occur due to the constantly changing direction of the magnetic field; as a result, part of the energy used to power the electric motor is lost as heat. The level of core losses depends on the frequency with which the direction of the magnetic field changes - and of course on the quality of the electrical steel.

There are modern DC motors that use laminations with a thickness of between 0.1 and 0.5 millimetres, and typically about 0.25-0.35 mm.

Electrical steel is an iron alloy which may have from zero to 6.5% silicon (Si:5Fe). Commercial alloys usually have silicon content up to 3.2% (higher concentrations usually provoke brittleness during cold rolling). Manganese and aluminium can be added up to 0.5%.

Silicon significantly increases the electrical resistivity of the steel, which decreases the induced eddy currents and narrows the hysteresis loop of the material, thus lowering the core loss. However, the grain structure hardens and embrittles the metal, which adversely affects the workability of the material, especially when rolling it. When alloying, the concentration levels of carbon, sulphur, oxygen and nitrogen must be kept low, as these elements may cause the presence of carbides, sulphides, oxides and nitrides. These compounds, even in particles as small as one micrometre in diameter, increase hysteresis losses while also decreasing magnetic permeability. The presence of carbon has a more detrimental effect than sulphur or oxygen. Carbon also causes magnetic aging when it slowly leaves the solid solution and precipitates as carbides, thus resulting in an increase in power loss over time. For these reasons, the carbon level is kept to 0.005% or lower. The carbon level can be reduced by annealing the steel in a decarburizing atmosphere, such as hydrogen.

Electrical steel made without special processing to control crystal orientation, non-oriented steel, usually has a silicon level of 2 to 3.5% and has similar magnetic properties in all directions, i.e., it is isotropic. Cold-rolled non-grain-oriented electrical steel is often abbreviated to NGO or NGO-ES.

Grain-oriented electrical steel usually has a silicon level of around 3%. It is processed in such a way that the optimal properties are developed in the rolling direction, due to a tight control of the crystal orientation relative to the sheet. It is used for the cores of power and distribution transformers, cold-rolled grain-oriented electrical steel is often abbreviated to GO or GO-ES.

A linear motor is an electric motor that has had its stator and rotor "unrolled" so that instead of producing a torque (rotation) it produces a linear force along its length. However, linear motors are not necessarily straight. Characteristically, a linear motor's active section has ends, whereas more conventional motors are arranged as a continuous loop.

The problem with stators that the invention solves is that the state of the art stators are produced by stacking relatively short laminations because the laminations are punched from a strip of electrical steel in one single punching operation. US4665329 discloses a method wherein a lamination is punched from a coil of electrical steel strip in the width direction and stacked immediately under the punch and after reaching the required number of laminations the stack is transported further for further processing. This limits the length of the stator to at most the width of a cold-rolled coil. Current cold-rolling mills are not able to supply cold-rolled material any wider than 1600 mm, and in most cases the width of electrical steel strip is limited further by the various heat treatments after cold rolling leading to a maximum of about 1100 mm. The known method therefore produces stators with a length of at most about 1100 mm. It is preferred that the individual laminations in the stator are all of the same length as the final stator, and that none of the laminations is made to length by connecting (e.g. by welding) shorter laminations together. The longer the individual laminations can be made, the longer the stator can be made, and the fewer connections between stators are needed in use in the ETT-system.

For tracks for ETT it is important to have as long a stator as possible, and as few interfaces between individual stators as possible. In the method according to the state of the art it is not able to produce stators which are longer than the width of cold-rolled electrical steel strips. The method according to the invention is able to produce long stators as a result of two improvements: supply of the electrical steel strip, optionally provided with a precoated adhesive, having a width which is the same or somewhat larger than the width of the stator to be produced, and the punching of the cut-outs on one or both sides along the length of the strip is performed in a continuous and repetitive operation wherein after punching out the cut-outs the strip is transported over a predetermined distance after which the next cut-outs are punched out, and so on until the entire strip of electrical steel is processed thusly.

From the strip of electrical steel strip, being provided with cut-outs on one or either side along its length a plurality of individual laminations is separated, preferably, but not necessarily, immediately after punching the cut-outs. Cut-outs may also optionally be provided in the strip away from the edges. It is also possible to coil the strip of electrical steel strip provided with cut-outs on one or either side along its length and transport it to a stack producing unit and uncoil it, for instance to a stack production unit on a location elsewhere in the world. In the preferable embodiment the electrical steel strip provided with the cut-outs is fed into a stack producing unit after leaving the punching device without intermediate coiling and uncoiling. In the stack producing unit individual laminations are separated from the strip and the first lamination is positioned on a stacking device, wherein the head of the lamination, being first part of the lamination is positioned on a stacking position. All subsequent laminations, when separated from the strip are placed on top of the preceding laminations. It is important that the laminations are not bent or deformed as this adversely affects their magnetic properties and also that the stacking is perfect. In the punching operation positioning grooves or the like may be introduced into the laminations to facilitate the correct alignment during stacking. Completed stacks are removed from the stacking device after stacking the required number of laminations and the next stack can be produced.

After completing the stack, the stack needs to be postprocessed. This postprocessing comprises:
- if necessary: aligning, squaring and/or making perpendicular
- bonding the laminations in the stack by welding, capillary action adhesive or the optionally precoated adhesive
- annealing the stack for stress relief and/or curing the adhesive;
- optionally cutting the stack to the required length.

In an embodiment the stack production unit is a stator production unit, preferably a production unit for long stators.

In a preferred embodiment the stack is produced from the strip of electrical steel strip after having been provided with cut-outs on one or either side along its length by producing a plurality of laminations of the required length from the continuous lamination by separating the laminations from the continuous lamination and positioning the laminations on the stacking position head-first on the stacking table on top of the preceding laminations until the required number of stacked laminations in the stack is reached, and wherein the first lamination is positioned on the stacking device with the head of the first lamination on the stacking position. This stacking pattern results in the head-end of the subsequent lamination being positioned on the head-end of the preceding lamination. The subsequent laminations may be positioned on top of each other e.g. by the photocopier principle where subsequent laminations are moved over the preceding lamination and dropped or laid down after the head of the subsequent lamination is positioned immediately over the head of the previous lamination e.g. using a receding table, or by a system where the subsequent lamination is picked up from a cutting position, e.g. by suckers, after separation the lamination from the continuous lamination, and transported to above the preceding lamination on the stacking device and released on top of the preceding lamination.

Completed stacks are removed from the stacking device after stacking the required number of laminations for post-processing and the next stack can be produced.

It is noted that the length of the completed stacks is only limited by the length of the stacking device and the apparatus that positions the subsequent lamination on top of the preceding one.

In an embodiment the separation of the plurality of individual laminations from the continuous laminations is performed by cutting means, such as a crop shear, a flying shear or a laser.

In a preferable embodiment the stack is produced from the strip of electrical steel strip after having been provided with cut-outs on one or either side along its length by guiding the head of the continuous lamination to the stacking position on the stacking device and laying down a first lamination of the required length from the continuous lamination on the stacking device, with the head of the first lamination on the stacking position. The continuous lamination is subsequently guided over the stacking device in a zig-zag pattern immediately over the first lamination and producing subsequent laminations from the continuous lamination at the required length by repeatedly folding the continuous lamination to-and-fro in a zig-zag pattern, wherein each 'zig' and each 'zag' has the length of a lamination, on top of the preceding laminations of the stack wherein the head-end of every subsequent lamination is positioned on top of the trailing end of the preceding lamination, and repeating the zig-zag folding until the required number of stacked laminations in the stack is reached. If the stack is then compressed in the vertical direction, either under its own weight, or by an active compression, then the location where the folded portions or folds are located that separate the 'zigs' from the 'zags' become sharp folds. This stack of zig-zag laminations is then removed from the stacking device for post-processing, thereby freeing the stacking device for producing a next stack of electrical steel laminations, followed by post-processing the stack. The zig-zag folding pattern results in the head of the subsequent lamination being positioned on the tail end of the preceding lamination. After compression of the stack, the stack is cut to length thereby removing all folds. This is important to produce the stacks at the chosen length, but also to remove the short-circuits formed by these folds. The head-to-tail folding pattern is also relevant because if the cutting of the cut-outs or the cutting to length is performed in such a way that burrs exist, then these burrs may cause short circuits because they are more likely to make an electrical connection if the stacking is in the zig-zag pattern (because the burrs point towards each other) than in the "photocopier pattern", where all burrs, if any, are in the same direction. So proper maintenance of the cutting apparatus and the separation apparatus is even more important for the stacking in the zig-zag pattern than in the "photocopier pattern".

It is noted that the length of the completed stacks is only limited by the length of the stacking device and the apparatus that positions the subsequent lamination on top of the preceding one.

As the strip of electrical steel strip is brittle it requires very careful handling during the zig-zagging. It is important that the laminations are not bent or deformed as this adversely affects their magnetic properties and also that the stacking is perfect. It may also cause breaking of the strip or the continuous lamination. However, in an embodiment use is made of this brittleness by making the angle of the folded portion acute with such rigorousness that the material breaks or snaps at each fold. The electrical steels may even be designed such that the brittleness is tailored for this purpose. This greatly facilitates the proper stacking and compression of the stack to produce stack is no longer required. The stack still needs to be cut to length because the snapping of the laminations will not occur at exactly the same place each time, thereby producing a ragged end of the stack. The cutting to length removes the raggedness.

The snapping of the lamination at the proper position during the folding to separate the individual laminations can be assisted by repeatedly scoring, scribing or perforating the continuous laminations (substantially) in the transverse direction, on the lower or upper side of the continuous lamination, or indeed on both sides, wherein the distance between two subsequent scores, scribes or perforations in the continuous lamination substantially is the intended length of the individual laminations. In practice the distance will be slightly more than the intended length of the individual laminations, in order to allow the final stack to have the intended length. The score (i.e. a line where the metal is of reduced thickness), scribe or a perforation is preferably made by a laser or a mechanical action, such as cutting device to make the score. The score, scribe or a perforation is applied before, but preferably after the cutting of the cut-outs. It is applied before applying the zig-zag folding pattern. The score, scribe or a perforation must locally weaken the steel to allow the desired snapping during the folding to separate the individual laminations, but the scored, scribed or perforated continuous lamination must remain integral during the repeated folding of the continuous lamination to-and-fro in a zig-zag folding pattern up to the snapping to separate the individual laminations.

In an embodiment the annealing during post-processing of the stack takes place in a batch annealing furnace or in a continuous annealing furnace, or in an induction furnace. As the length of the stack increases it may be increasingly difficult to anneal the stack in a batch process in its entirety. Modern induction type furnaces or annealing furnaces operating as continuous annealing furnaces may be used to subjecting successive cross-sections of the stack to a stress relief anneal treatment optionally in combination with a curing heat treatment of the coating between the laminations thereby achieving the desired microstructure and properties along the entire length of the stack by leading the stack through a furnace which is shorter than the length of the stack. The advantage of a stack annealed by this method is that each portion of the stack has undergone the same heat treatment, but not simultaneously. This allows a degree of flexibility in choice of stack length because the furnace length is no longer limiting.

In an embodiment the one end of the stack is provided with a protrusion and the other end of the stack by an intrusion that is congruent with the said protrusion, so that two stacks can be interlocked or clamped. A groove-and-tongue connection or a male-female connection or a dove-tail joint are examples of such interlocks. These interlocks may provide a positive clamping together of the individual stacks in the track.

According to the invention, the post-processed stack is a stator for a linear motor.

The invention is also embodied in a stator produced according to the invention. The stator produced according to the zig-zag folding has a distinctly different stacking from the stacking of prior art stacks because of their orientation head-on-tail.

In an embodiment the stator has a length of at least 10 m, preferably of at least 20 m, more preferably of at least 30 m. Transport limitations may limit the practical length of a track. For instance, transport in a 40 ft sea container limits the length to about 12 m.

In an embodiment the stack is provided with a protrusion and the other end of the stack by an intrusion that is congruent with the said protrusion, so that two stacks can be interlocked or clamped. A groove-and-tongue connection or a male-female connection or a dove-tail joint are examples of such interlocks. These interlocks may provide a positive clamping together of the individual stacks in the track.

The invention will now further be explained by means of the following schematic and non-limiting drawings.

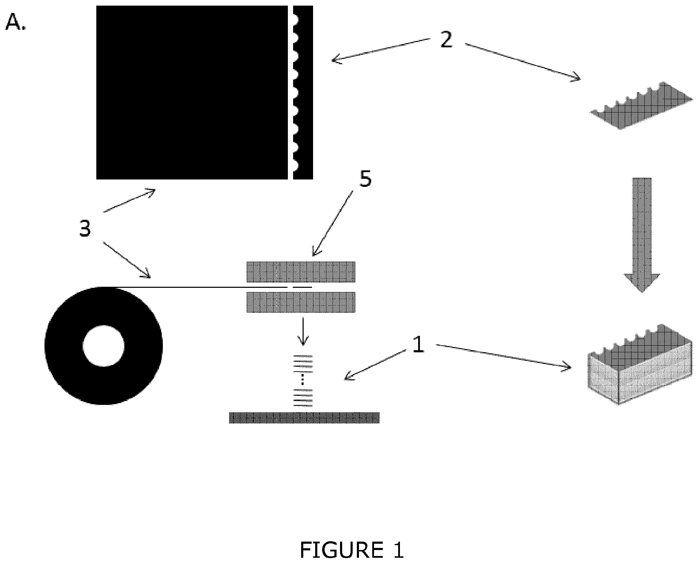

Figure 1 shows a drawing of a method according to the prior art where the lamination 4 is stamped from a coil or sheet 3 by a stamping device 5 and wherein the stack 1 is formed by the stacking the laminations 2. The stack 1 cannot be longer than the width of the strip or sheet 3.

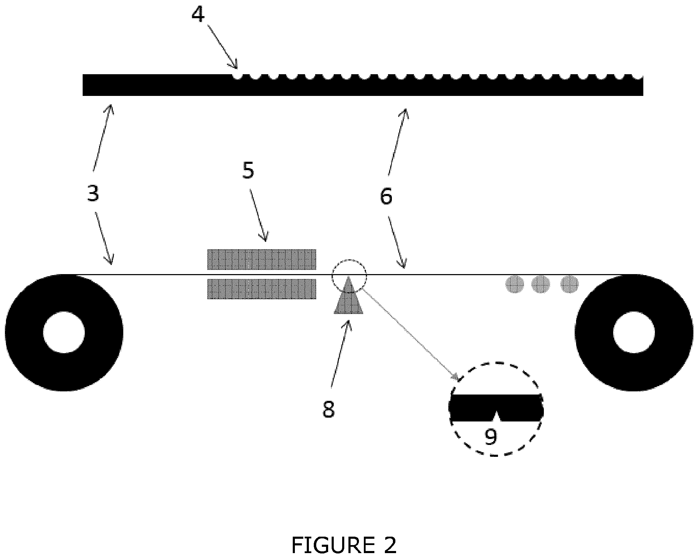

Figure 2 shows an embodiment of the invention in which a continuous lamination 6 is produced from the strip of steel 3 by cutting out the cut-outs 4 by means of stamping device 5 and wherein the continuous lamination is coiled. A scoring, scribing or perforating device (8) may, if required, provide scores, scribes or perforations to aid the separation of individual laminations later on. The coiled continuous lamination 6 may be transported to another location to produce stacks elsewhere.

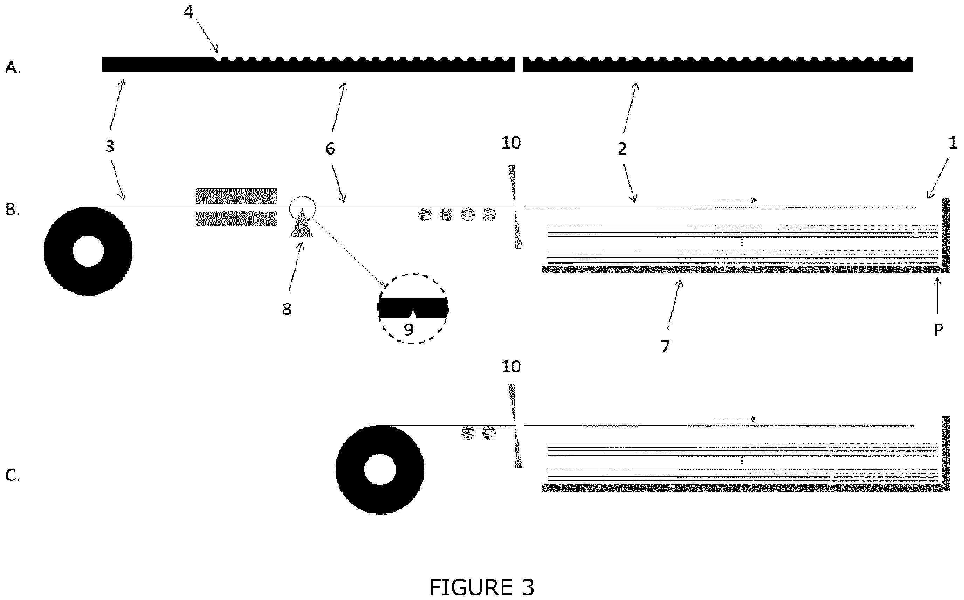

Figure 3 depicts an embodiment of the invention in which a continuous lamination 6 is produced from the strip of steel 3 by cutting out the cut-outs 4 by means of stamping device 5 and wherein the continuous lamination is passed to cutting means (10) which separate individual laminations 2 from the continuous lamination 6 and stacks them on the stacking device 7, where the head of the first lamination is positioned on a stacking position P and forms a stack 1. Figure 3C shows the separation and stacking of the individual lamination on the basis of a coiled continuous lamination, produced e.g. according to figure 2.

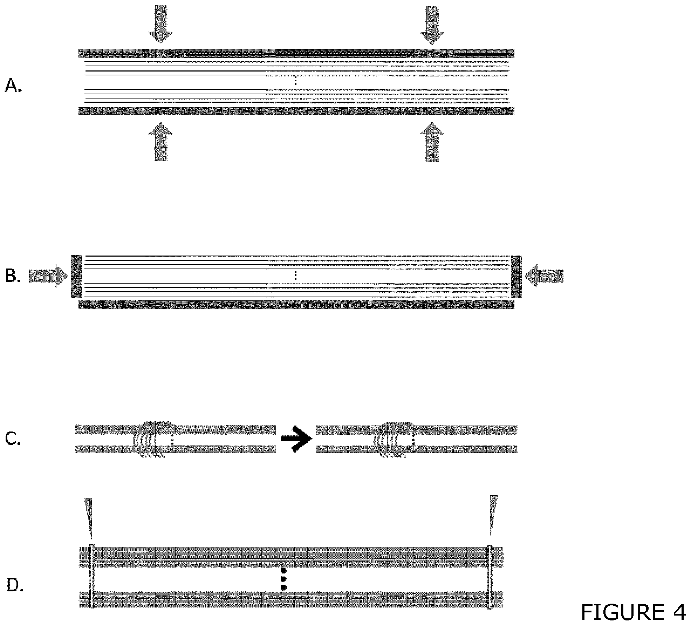

Figure 4 depicts some important steps in the postprocessing of the stacks: A. Compression; B. Aligning; C. Stress relief annealing and curing of the coating; D. Cutting the stack to length.

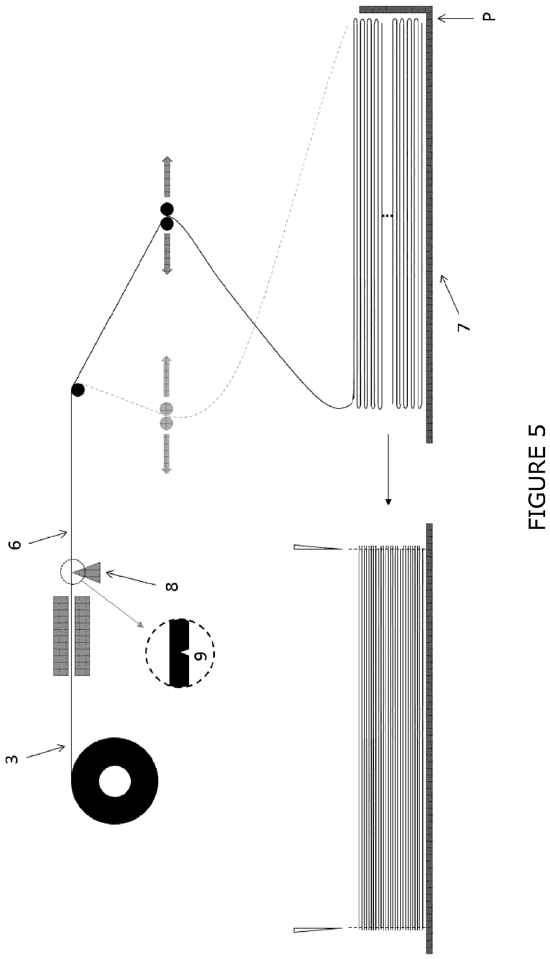

Figure 5 depicts an embodiment of the invention in which a continuous lamination 6 is produced from the strip of steel 3 by cutting out the cut-outs 4 by means of stamping device 5 and wherein the continuous lamination is passed to a zig-zag folding device 11 which folds the continuous lamination into a stack in a zig-zag pattern on the stacking device 7. The head of the first lamination is positioned on a stacking position P after which the stack is formed in a zig-zag pattern. After compression and cutting to length with cutting means 11 the stack is post-processed.

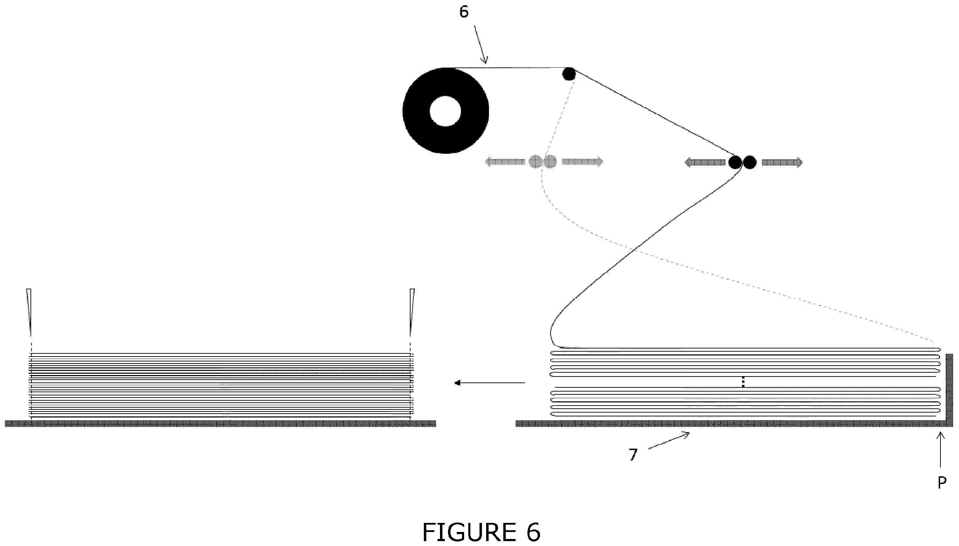

Figure 6 shows the embodiment with the zig-zag folding device 11 wherein the stack is formed on the basis of a coiled continuous lamination, produced e.g. according to figure 2.

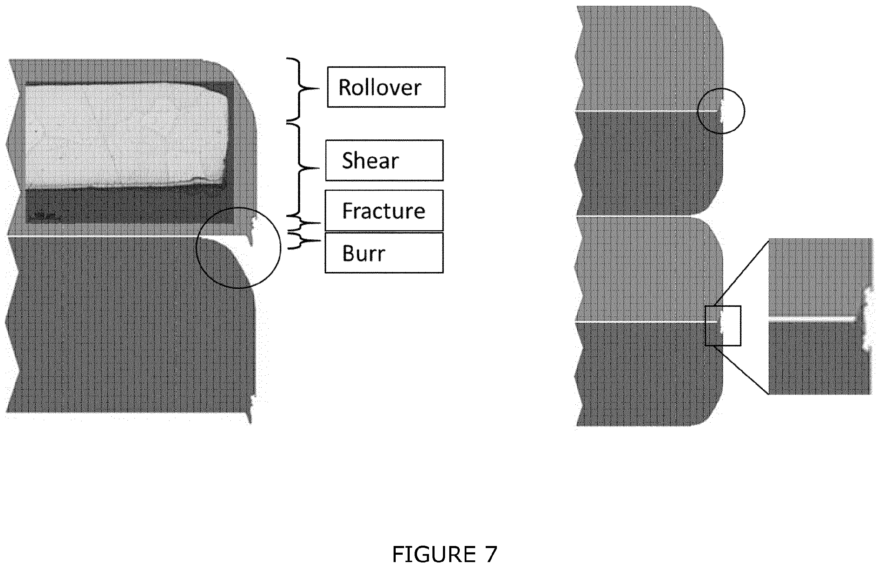

Figure 7 shows the importance of maintenance of the stamping means 5 where a burr may be formed after stamping with blunt tools. Figure 7 B shows the distinctly different stacking pattern when produced according to the zig-zag folding pattern. If burrs are present, there is a danger of short circuits as depicted in the square. By either removing the burrs or preventing the formation by using tools with the correct clearance this can be mitigated.

## Claims

1. Method for producing a stack (1) of electrical steel laminations (2) comprising the steps of:
- Providing a strip (3) of electrical steel, preferably wherein the strip is provided in the form of a coiled strip,
- Producing cut-outs (4) along the length of one or both sides of the strip in a continuous process, e.g. by punching or stamping means (5), to produce a continuous lamination (6) having the width of the stack;
- Separating a plurality of individual laminations from the continuous lamination (6);
- Stacking the plurality of individual laminations (2) on a stacking position (P) on a stacking device (7) until the required number of individual laminations (2) for the stack is reached;
- removing the stack (1) from the stacking device for post-processing, thereby freeing the stacking device (7) for producing a next stack of electrical steel laminations;
- Postprocessing the stack (1) by
• optionally aligning, squaring and/or making perpendicular the stack (1), if necessary;
• bonding, and optionally aligning, the laminations in the stack (1) by welding, capillary action adhesive or activation or the optionally precoated adhesive;
• annealing the stack (1) for stress relief and/or curing the adhesive;
• optionally cutting the stack (1) to the required length,
wherein the postprocessed stack is a stator for a linear motor.

2. Method according to claim 1 comprising the steps of:
- guiding the head of the continuous lamination to the stacking position on the stacking device;
- laying down a first lamination of the required length from the continuous lamination on the stacking device;
- guiding the continuous lamination over the stacking device in a zig-zag pattern immediately over the first lamination and producing subsequent laminations from the continuous lamination at the required length by repeatedly folding the continuous lamination to-and-fro in a zig-zag pattern on top of the preceding laminations of the stack wherein the head of every subsequent lamination is positioned on top of the trailing end of the preceding lamination, and repeating the zig-zag folding until the required number of stacked laminations in the stack is reached;
- removing the stack from the stacking device for post-processing, thereby freeing the stacking device for producing a next stack of electrical steel laminations;
- postprocessing the stack.

3. Method according to claim 1 comprising the steps of:
- guiding the head of the continuous lamination to the stacking position on the stacking device and separating the first lamination from the continuous lamination, or guiding the first lamination after having been separated from the continuous lamination to the stacking position on the stacking device;
- producing a plurality of laminations of the required length from the continuous lamination by separating the laminations from the continuous lamination and positioning the laminations on the stacking position head-first on the stacking table on top of the preceding laminations until the required number of stacked laminations in the stack is reached;
- removing the stack from the stacking device for post-processing, thereby freeing the stacking device for producing a next stack of electrical steel laminations;
- postprocessing the stack.

4. Method according to claim 2 wherein the cutting of the stacked, bonded and annealed laminations to the required length is mandatory.

5. Method according to claim 2 or 3 wherein the folding of the subsequent laminations results in snapping the lamination at the fold thereby producing individual lengths of subsequent lamination wherein the head of every subsequent lamination is positioned on top of the trailing end of the preceding lamination, and wherein the trailing end of a every subsequent lamination is positioned on top of the head end of the preceding lamination.

6. Method according to claim 5 wherein the continuous lamination is repeatedly scored, scribed or perforated (substantially) by scoring, scribing or perforating means (8) in the transverse direction to aid the snapping of the lamination at the fold during the folding, wherein the distance between two subsequent scores, scribes or perforations in the continuous lamination substantially is the intended length of the individual laminations.

7. Method according to claim 6 wherein the score, scribe or perforation (9) is made by a laser or mechanical means.

8. Method according to any one of the preceding claims wherein the annealing during postprocessing of the stack takes place in a batch annealing furnace or in a continuous annealing furnace, or in an induction furnace.

9. Method according to any one of the claims 1 or 3 wherein the separation of the plurality of individual laminations from the continuous lamination is performed by cutting means, such as a flying shear or a laser.

10. Method according to any one of the preceding claims wherein the stack is provided with a protrusion and the other end of the stack by an intrusion that is congruent with said protrusion, so that subsequent stacks can be interlocked.

11. Method according to claim 10 wherein the interlock is provided by a groove-and-tongue connection, or a male-female connection, or a dove-tail joint.

12. Method according to claim 1 wherein the stator has a length of at least 10 m.

13. Method according to claim 1 wherein the stator has a length of about 12 m.

14. Method according to claim 1 wherein the stator has a length of at least 20 m.

## Patentansprüche

1. Verfahren zur Herstellung eines Stapels (1) aus Elektrostahlblechen (2), umfassend die folgenden Schritte:
- Bereitstellen eines Bandes (3) aus Elektrostahl, wobei das Band vorzugsweise in Form eines aufgewickelten Bandes bereitgestellt wird,
- Herstellen von Aussparungen (4) entlang der Länge einer oder beider Seiten des Bandes in einem kontinuierlichen Prozess, z. B. durch Stanz- oder Prägemittel (5), um ein kontinuierliches Blech (6) mit der Breite des Stapels (1) herzustellen;
- Abtrennen einer Vielzahl von einzelnen Blechen von dem kontinuierlichen Blech;
- Stapeln der Vielzahl von einzelnen Blechen in einer Stapelposition (P) an einer Stapelvorrichtung (7), bis die erforderliche Anzahl an einzelnen Blechen für den Stapel erreicht ist;
- Entnehmen des Stapels aus der Stapelvorrichtung zum Weiterverarbeiten, wodurch die Stapelvorrichtung zur Herstellung eines nächsten Stapels aus Elektroblechen frei wird;
- Nachbearbeiten des Stapels durch
• optionales Ausrichten, Begradigen und/oder Loten des Stapels, falls erforderlich;
• Binden und optional Ausrichten der Bleche in dem Stapel durch Schweißen, Kapillarwirkungsklebstoff oder -aktivierung oder den optional vorbeschichteten Klebstoff;
• Glühen des Stapels zum Spannungsabbau und/oder Aushärten des Klebstoffs;
• optionales Zuschneiden des Stapels auf die erforderliche Länge, wobei der nachbearbeitete Stapel ein Stator für einen Linearmotor ist.

2. Verfahren nach Anspruch 1, umfassend die folgenden Schritte:
- Führen des Kopfes des kontinuierlichen Blechs zu der Stapelposition an der Stapelvorrichtung;
- Ablegen eines ersten Blechs der erforderlichen Länge aus dem kontinuierlichen Blech auf der Stapelvorrichtung;
- Führen des kontinuierlichen Blechs über die Stapelvorrichtung in einem Zickzack-Muster unmittelbar über das erste Blech und Herstellen von nachfolgenden Blechen aus dem kontinuierlichen Blech in der erforderlichen Länge durch wiederholtes Hin- und Herfalten des kontinuierlichen Blechs in einem Zickzack-Muster auf den vorhergehenden Blechen des Stapels, wobei der Kopf jedes nachfolgenden Blechs auf dem hinteren Ende des vorhergehenden Blechs positioniert wird, und Wiederholen des Zickzack-Faltens, bis die erforderliche Anzahl gestapelter Bleche in dem Stapel erreicht ist;
- Entnehmen des Stapels aus der Stapelvorrichtung zum Weiterverarbeiten, wodurch die Stapelvorrichtung zur Herstellung eines nächsten Stapels aus Elektroblechen frei wird;
- Nachbearbeiten des Stapels.

3. Verfahren nach Anspruch 1, umfassend die folgenden Schritte:
- Führen des Kopfes des kontinuierlichen Blechs zu der Stapelposition an der Stapelvorrichtung und Abtrennen des ersten Blechs von dem kontinuierlichen Blech oder Führen des ersten Blechs nach Abtrennen von dem kontinuierlichen Blech zu der Stapelposition an der Stapelvorrichtung;
- Herstellen einer Vielzahl von Blechen der erforderlichen Länge aus dem kontinuierlichen Blech durch Abtrennen der Bleche von dem kontinuierlichen Blech und Positionieren der Bleche in der Stapelposition kopfüber auf dem Stapeltisch auf den vorhergehenden Blechen, bis die erforderliche Anzahl gestapelter Bleche in dem Stapel erreicht ist;
- Entnehmen des Stapels aus der Stapelvorrichtung zum Weiterverarbeiten, wodurch die Stapelvorrichtung zur Herstellung eines nächsten Stapels aus Elektroblechen frei wird;
- Nachbearbeiten des Stapels.

4. Verfahren nach Anspruch 2, wobei das Zuschneiden der gestapelten, gebundenen und geglühten Bleche auf die erforderliche Länge zwingend erforderlich ist.

5. Verfahren nach Anspruch 2 oder 3, wobei das Falten der nachfolgenden Bleche zum Brechen des Blechs an der Falte führt, wodurch einzelne Längen nachfolgender Bleche erzeugt werden, wobei der Kopf jedes nachfolgenden Blechs auf dem hinteren Ende des vorhergehenden Blechs positioniert ist und wobei das hintere Ende jedes nachfolgenden Blechs auf dem Kopf des vorhergehenden Blechs positioniert ist.

6. Verfahren nach Anspruch 5, wobei die kontinuierlichen Bleche durch Kerben-, Ritzen- oder Perforiermittel (8) in Querrichtung wiederholt (im Wesentlichen) eingekerbt, eingeritzt oder perforiert werden, um das Brechen des Blechs an der Falte während des Faltens zu erleichtern, wobei die Entfernung zwischen zwei aufeinanderfolgenden Kerben, Ritzen oder Perforationen in dem kontinuierlichen Blech im Wesentlichen der beabsichtigten Länge der einzelnen Bleche entspricht.

7. Verfahren nach Anspruch 6, wobei die Kerbe, Ritzung oder Perforation (9) mittels eines Lasers oder mechanischer Mittel erzeugt wird.

8. Verfahren nach einem der vorhergehenden Ansprüche, wobei das Glühen während des Nachbearbeitens des Stapels in einem Kammerglühofen oder in einem Ofen des kontinuierlichen Glühens oder in einem Induktionsofen erfolgt.

9. Verfahren nach einem der Ansprüche 1 oder 3, wobei das Abtrennen der Vielzahl von einzelnen Blechen von den kontinuierlichen Blechen durch Schneidmittel, wie etwa eine fliegende Schere oder einen Laser, erfolgt.

10. Verfahren nach einem der vorhergehenden Ansprüche, wobei der Stapel mit einem Vorsprung und das andere Ende des Stapels durch eine Vertiefung bereitgestellt ist, die mit dem Vorsprung deckungsgleich ist, sodass nachfolgende Stapel ineinandergreifen können.

11. Verfahren nach Anspruch 10, wobei das Ineinandergreifen durch eine Nut-Feder-Verbindung, eine Stecker-Buchsen-Verbindung oder eine Schwalbenschwanzverbindung erfolgt.

12. Verfahren nach Anspruch 1, wobei der Stator eine Länge von mindestens 10 m aufweist.

13. Verfahren nach Anspruch 1, wobei der Stator eine Länge von etwa 12 m aufweist.

14. Verfahren nach Anspruch 1, wobei der Stator eine Länge von mindestens 20 m aufweist.

## Revendications

1. Procédé permettant la fabrication d'une pile (1) de tôles d'acier magnétique (2) comprenant les étapes de :
- fourniture d'une bande (3) d'acier magnétique, de préférence dans lequel la bande est fournie sous la forme d'une bande enroulée,
- production de découpes (4) sur la longueur d'un ou des deux côtés de la bande dans un processus continu, par exemple par des moyens de poinçonnage ou d'emboutissage (5), pour produire une tôle continue (6) comportant la largeur de la pile (1);
- séparation d'une pluralité de tôles individuelles de la tôle continue ;
- empilage de la pluralité de tôles individuelles sur une position d'empilage (P) sur un dispositif d'empilage (7) jusqu'à ce que le nombre requis de tôles individuelles pour la pile soit atteint ;
- retrait de la pile du dispositif d'empilage en vue d'un post-traitement, libérant ainsi le dispositif d'empilage pour produire une pile suivante de tôles d'acier magnétiques ;
- post-traitement de la pile par
• éventuellement alignement, mise à l'équerre et/ou à la perpendiculaire de la pile, si nécessaire ;
• liaison, et éventuellement alignement, des tôles dans la pile par soudage, par adhésif à action capillaire ou par activation ou par l'adhésif éventuellement pré-enduit ;
• recuit de l'empilement pour soulager les contraintes et/ou durcir l'adhésif ;
• éventuellement coupe de la pile à la longueur requise, dans lequel la pile post-traitée est un stator pour un moteur linéaire.

2. Procédé selon la revendication 1, comprenant les étapes de :
- guidage de la tête de la tôle continue jusqu'à la position d'empilage sur le dispositif d'empilage ;
- dépôt d'une première tôle de la longueur requise à partir de la tôle continue sur le dispositif d'empilage ;
- guidage de la tôle continue sur le dispositif d'empilage selon un motif en zigzag immédiatement au-dessus de la première tôle et production des tôles suivantes à partir de la tôle continue à la longueur requise en pliant de manière répétée la tôle continue en avant et en arrière selon un motif en zigzag sur le dessus des tôles précédents de la pile, dans lequel la tête de chaque tôle suivante est positionnée sur le dessus de l'extrémité arrière de la tôle précédente, et en répétant le pliage en zigzag jusqu'à ce que le nombre requis de tôles empilées dans la pile soit atteint ;
- retrait de la pile du dispositif d'empilage en vue d'un post-traitement, libérant ainsi le dispositif d'empilage pour produire une pile suivante de tôles d'acier magnétiques ;
- post-traitement de la pile.

3. Procédé selon la revendication 1, comprenant les étapes de :
- guidage de la tête de la tôle continue jusqu'à la position d'empilage sur le dispositif d'empilage et séparation de la première tôle de la tôle continu, ou guidage de la première tôle après avoir été séparée de la tôle continue jusqu'à la position d'empilage sur le dispositif d'empilage ;
- production d'une pluralité de tôles de la longueur requise à partir de la tôle continue en séparant les tôles de la tôle continue et positionnement des tôles sur la position d'empilage tête la première sur la table d'empilage au-dessus des tôles précédentes jusqu'à ce que le nombre requis de tôles empilées dans la pile soit atteint ;
- retrait de la pile du dispositif d'empilage en vue d'un post-traitement, libérant ainsi le dispositif d'empilage pour produire une pile suivante de tôles d'acier magnétiques ;
- post-traitement de la pile.

4. Procédé selon la revendication 2, dans lequel la coupe des tôles empilées, liées et recuites à la longueur requise étant obligatoire.

5. Procédé selon la revendication 2 ou 3, dans lequel le pliage des tôles ultérieures entraîne la rupture de la tôle au niveau du pli, produisant ainsi des longueurs individuelles de tôle ultérieure, dans lequel la tête de chaque tôle ultérieure est positionnée au-dessus de l'extrémité arrière de la tôle précédente, et dans lequel l'extrémité arrière de chaque tôle ultérieure est positionnée au-dessus de l'extrémité de tête de la tôle précédente.

6. Procédé selon la revendication 5, dans lequel les tôles continues sont marquées, tracées ou perforées de manière répétée (essentiellement) par des moyens de marquage, de traçage ou de perforation (8) dans la direction transversale pour faciliter la rupture de la tôle au niveau du pli durant le pliage, dans lequel la distance entre deux marquages, tracés ou perforations ultérieurs dans la tôle continue est sensiblement la longueur prévue des tôles individuelles.

7. Procédé selon la revendication 6 dans lequel la marque, le traçage ou la perforation (9) est réalisé par un laser ou par un moyen mécanique.

8. Procédé selon l'une quelconque des revendications précédentes dans lequel le recuit durant le post-traitement de la pile a lieu dans un four de recuit discontinu ou dans un four de recuit continu, ou dans un four à induction.

9. Procédé selon l'une quelconque des revendications 1 ou 3, ladite séparation de la pluralité de tôles individuelles des tôles continues étant effectuée par des moyens de coupe, tels qu'une cisaille volante ou un laser.

10. Procédé selon l'une quelconque des revendications précédentes, dans lequel la pile est dotée d'une saillie et l'autre extrémité de la pile d'une intrusion qui est congruente avec ladite saillie, afin que les piles suivantes puissent être imbriquées.

11. Procédé selon la revendication 10, dans lequel l'imbrication est assurée par un raccord à rainure et languette, ou un raccord mâle-femelle, ou un joint à queue d'aronde.

12. Procédé selon la revendication 1 dans lequel le stator comporte une longueur supérieure ou égale à 10 m.

13. Procédé selon la revendication 1 dans lequel le stator comporte une longueur d'environ 12 m.

14. Procédé selon la revendication 1 dans lequel le stator comporte une longueur supérieure ou égale à 20 m.
